# EUROPÄISCHE PATENTSCHRIFT

(11) **EP 1 611 466 B1**
(45) Veröffentlichungstag und Bekanntmachung des Hinweises auf die Patenterteilung: **22.08.2007**
(21) Anmeldenummer: 04721504.1
(22) Anmeldetag: 18.03.2004
(51) Int. Cl.: G02B 5/18, B42D 15/10, G06K 19/16

(54) **Verfahren zur Herstellung von zwei überlagernden Mikrostrukturen**
Method for producing two overlaying microstructures
Procédé de fabrication de deux microstructures superposées

(30) Priorität: 21.03.2003 DE 10312564; 22.04.2003 DE 10318105
(43) Veröffentlichungstag der Anmeldung: 04.01.2006
(73) Patentinhaber: OVD Kinegram AG, 6301 Zug (CH)
(72) Erfinder: SCHILLING, Andreas, CH-6332 Hagendorn (CH); TOMPKIN, Wayne, Robert, CH-5400 Baden (CH)
(74) Vertreter: Zinsinger, Norbert
(86) Internationale Anmeldenummer: PCT/EP2004/002822
(87) Internationale Veröffentlichungsnummer: WO 2004/083911

(56) Entgegenhaltungen:
- WO-A-00/61386
- WO-A-03/084764
- DE-A- 10 028 426
- US-A- 4 537 504
- US-A- 5 138 604
- US-A- 6 043 936
- US-B1- 6 359 735
- PATENT ABSTRACTS OF JAPAN vol. 2000, no. 12, 3. Januar 2001 (2001-01-03) & JP 2000 264000 A (DAINIPPON PRINTING CO LTD), 26. September 2000 (2000-09-26)

## Beschreibung

Die Erfindung bezieht sich auf ein Verfahren zur Herstellung von Mikrostrukturen, welche durch Überlagerung einer Reliefstruktur mit mindestens einer zweiten Reliefstruktur gebildet sind.

Lichtbeugende Mikrostrukturen weisen eine Vielzahl von meist als parallele Furchen ausgestalteten Vertiefungen auf, die z.B. ein optisches Gitter mit einer mikroskopisch feinen Reliefstruktur bilden. Auf die Mikrostrukturen einfallendes Licht wird in einer durch die Mikrostruktur vorbestimmten Weise gebeugt oder gestreut. Mosaike aus den Mikrostrukturen werden beispielsweise in Kunststoff oder Metall abgeformt und dienen als Echtheitsmerkmale für wertvolle Gegenstände. Diese Echtheltsmerkmale weisen ein auffälliges optisches Verhalten auf und sind schwer nachzuahmen.

Für die Herstellung von derartigen Mikrostrukturen sind einige Verfahren bekannt. So erzeugen mechanische Vorrichtungen die Mikrostrukturen durch Ritzen von vielen parallelen Furchen in eine Substratoberfläche, Die Form des Ritzwerkzeugs bestimmt das Profil der Reliefstruktur. Das Ritzen der Reliefstruktur wird mit zunehmender Linienzahl pro mm immer schwieriger und demzufolge teurer. Kostengünstiger sind holographische Verfahren, bei denen zwei kohärente Lichtstrahlen aus einer Laserlichtquelle auf einer lichtempfindlichen Schicht aus Photoresist zur Interferenz gebracht werden. Das Interferenzbild mit seinen hellen und dunklen Streifen belichten den Photoresist entsprechend der lokalen Lichtintensität. Nach dem Entwickeln weist die Oberfläche des Photoresist eine Reliefstruktur mit einem symmetrischen Profil auf. In einem weiteren Verfahren zeichnet ein Elektronenstrahl die Reliefstruktur Furche um Furche in die Photoresistschicht, wobei die Furchen auch gekrümmte Linien bilden können. Die nach diesen Verfahren hergestellten Mikrostrukturmasterformen lassen sich auf galvanischem Weg vervielfältigen und mit den Kopien metallische Prägestempel erzeugen, mit denen sich die Mikrostrukturen in Metall oder Kunststoff abformen lassen. Bei diesen Verfahren ist aber der apparative Aufwand für die Herstellung von Mikrostrukturen ausserordentlich hoch.

Es ist auch aus der EP-A 0 105 099 bekannt, neue Mikrostrukturen in Form eines Mosaiks zu synthetisieren, wobei in jedem Flächenelement des Mosaiks eine aus einem Satz von verschiedenen Reliefstrukturen, vorbestimmt im Azimut ausgerichtet, mechanisch abgeformt wird.

Aus der US 5,138,604 ist ein Aufzeichnungsmittel bekannt, dessen erste, makroskopische Reliefstruktur mit einer zweiten, diffraktiven Struktur überlagert ist. Die erste Reliefstruktur wird mittels Belichten durch eine Maske hindurch in einer unbelichteten Photoresist - Schicht registriert. Anschliessend wird die belichtete Photoresist - Schicht erneut belichtet, wobei auf der Photoresist - Schicht das Interferenzmuster eines Hologramms einwirkt. Nach dem Entwickeln des Photoresists verbleibt die erste, der Maskenstruktur entsprechende Reliefstruktur auf dem Substrat der Photoresist - Schicht zurück, wobei die Rücken der ersten Reliefstruktur die diffraktive Struktur des Hologramms aufweisen.

Die WO 00/61386 beschreibt die Herstellung einer Dekorationsfolie. Mittels eines Prägestempels werden makroskopische Strukturen in die Oberfläche einer Folie abgeformt. Werden anstelle von glatten Stempelflächen solche mit einer mikroskopisch feinen Struktur versehene Stempelflächen zum Abformen verwendet, weisen die in die Folie abgeformten, makroskopischen Strukturen die mikroskopisch feinen Strukturen auf.

Eine in JP 2000 264000 beschriebene Methode zur Herstellung einer diffraktiven Struktur, die mit eine Zusätzlichen Struktur überlagert ist. Die Methode nutzt die Längenveränderung eines durch Strahlung aushärtenden Harzes aus, wenn dieses während des Aushärtungsprozesses stark erwärmt ist. Ein diffraktives Relief wird zunächst in die halbausgehärtete Schicht des Harzes abgeformt und auf der mit dem Relief verformten Oberfläche eine Reflexionsschicht aufgebracht. Durch Erwärmen des Harzes bewirkt die Längenveränderung eine zusätzliche Verformung der Oberfläche in Form von Runzeln. Diese Runzeln überlagern auch das Relief. Das weitere Aushärten des Harzes fixiert das Relief mit der überlagerten Runzelstruktur.

Aus der US 4,537,504 ist eine diffraktive Struktur bekannt, die auf einer gewellten Oberfläche abgeformt ist, wobei die Periode der Wellen der Oberfläche viel grösser als die Periode der diffraktive Struktur ist.

Die US 6,043,936 beschreibt zwei Methoden zur Herstellung der Gussform zum Abformen von diffraktiven Stufenpyramiden. Eine erste Methode ist das oben beschriebene, rein mechanische Abtragungsverfahren und die zweite Methode benützt ein anisotropisches Ätzverfahren in Silizium zum Erzeugen der Pyramidenform. Anschliessend erhalten die glatten Pyramidenflächen einen Überzug aus Photoresist. Beispielsweise wird unter der Einwirkung eines Elektronenstrahls die Photoresist - Schicht so belichtet, dass nach dem Entwickeln der Photoresist - Schicht die Pyramidenflächen Stufen aufweisen Die diffraktiven Stufenpyramiden werden für die Herstellung von Stempelmatrizen galvanisch abgeformt.

Der Gegenstand der WO 03/084764 betrifft ein schwerkopierbares Sicherheitselement eingeschlossen in einem Schichtverbund. Die diffraktiven Strukturen des Sicherheitselements sind einer makroskopischen Oberlagerungsfunktion additiv überlagert, wobei sich die Überlagerungsfunktion im Vergleich zu den diffraktiven Strukturen langsam ändern.

Aus den Dokumenten DE 10028426 und US 6,359,735 sind weitere Herstellungsverfahren von zwei sich überlagernden Mikrostrukturen bekannt.

Der Erfindung liegt die Aufgabe zugrunde, ein kostengünstiges Verfahren zum Herstellen einer Mikrostruktur vorzuschlagen, deren Reliefstruktur durch eine Überlagerung mindestens zweier Reliefstrukturen erzeugt ist, so dass eine mit hoher Genauigkeit relativ einfach herstellbare, komplizierte und Infolgedessen schwer imitierbare Mikrostruktur, z.B. für einen Replizier-Master, gebildet wird.

Die genannte Aufgabe wird erfindungsgemäss durch die in Anspruch 1 angegebenen Merkmale gelöst und basiert auf der Idee, einen Präge- oder sonstigen mechanischen Abformprozess mit einer Photostrukturierung zu kombinieren, um kostengünstige, trotzdem aber komplizierte Mikrostrukturen zu erzeugen. Vorteilhafte Ausgestaltungen der Erfindung ergeben sich aus den weiteren Ansprüchen.

Ein Ausführungsbeispiel der Erfindung ist in der Zeichnung dargestellt und wird im folgenden näher beschrieben.

Es zeigen:
- Figur 1: ein Substrat mit einer Schicht aus Photoresist,
- Figur 2: die geprägte Oberfläche der Schicht aus Photoresist,
- Figur 3: eine Mattstruktur,
- Figur 4: das Belichten des Photoresist,
- Figur 5: ein Profil eines Mikroreliefs und
- Figur 6: einen Prägestempel mit einer Reliefmatrize.

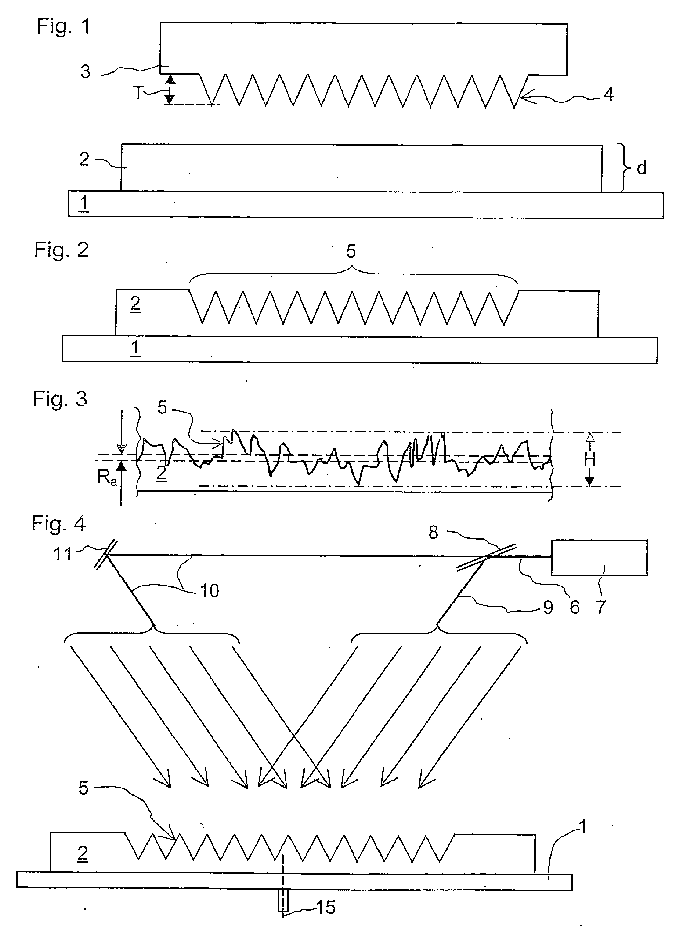

In der Figur 1 ist ein erster Schritt zur Herstellung von optisch diffraktiven Strukturen im Querschnitt gezeigt. Auf einem flachen Substrat 1 aus Metall, Glas, Keramik oder Kunststoff ist eine Schicht 2 aus Photoresist aufgebracht. Die Dicke d der Schicht 2 liegt im Bereich von 0,1 µm bis 100 µm und richtet sich nach der Tiefe der zu erzeugenden diffraktiven Strukturen. Lichtempfindliche Photoresistmaterialien sind bekannt, beispielsweise von Shipley das Produkt Microposit S1813. Das Photoresistmaterial wird auf das Substrat 1 in flüssiger Form aufgebracht und unter Wärmeeinwirkung verfestigt. In die ebene freie Oberfläche der Schicht 2 wird in einer bevorzugten Variante eine auf einem Prägestempel 3 montierte Reliefmatrize 4 abgesenkt und in die freie Oberfläche der Schicht 2 so eingedrückt, dass die Reliefmatrize 4 in die freie Oberfläche der Schicht 2 abgeformt wird.

Gemäss der Figur 2 weist nach dem Abheben des Prägestempels 3 (Fig. 1) die Schicht 2 im Bereich des Prägestempels eine Reliefstruktur 5 auf, die ein Negativ der Reliefmatrize 4 (Fig. 1) ist. Während des Prägens darf sich das Substrat 1 nicht verformen bzw. durchbiegen, damit die Reliefmatrize 4 die Reliefstruktur 5 möglichst formgetreu auf die Schicht 2 überträgt.

Ohne die Bedeutung des Begriffs "Reliefstruktur" 5 einzuschränken, ist in der Zeichnung der Figur 1 das Profil der abzuformenden Reliefmatrize 4 beispielhaft mit einem symmetrischen Sägezahnprofil eines periodischen Gitters dargestellt. Für die Reliefstruktur 5 eignen sich insbesondere auch eines der anderen bekannten Profile, wie z.B. asymmetrische Sägezahnprofile, rechteckförmige Profile, sinusförmige und sinusähnliche Profile, eine regelmässige Anordnung von Pyramiden usw., die ein periodisches lineares Gitter bzw. Kreuzgitter bilden. Die Spatialfrequenz der Reliefstruktur 5 kann aus dem weiten Bereich von 1 Linie/mm bis einigen 1.000 Linien/mm gewählt sein. Die Strukturtiefe T der Reliefstruktur 5 eines periodischen Gitters liegt üblicherweise-im Bereich von 0.1 µm bis 100 µm, wobei aus technischen Gründen Reliefstrukturen 5 mit einer grossen Strukturtiefe T (Fig. 1) typischerweise einen niederen Wert der Spatialfrequenz aufweisen.

In einer anderen Verfahrensvariante wird in die Oberfläche der Schicht 2 eine isotrope oder anisotrope Mattstruktur abgeformt, die die Reliefstruktur 5 bildet. Die Mattstrukturen enthalten mikroskopisch feine Reliefstrukturelemente, die das Streuvermögen bestimmen und die nur mit statistischen Kenngrössen beschrieben werden können, wie z.B. Mittenrauhwert Rₐ, Korrelationslänge I_{c} usw., wobei die Werte für den Mittenrauhwert Rₐ im Bereich 20 nm bis 2.500 nm liegen mit Vorzugswerten von 50 nm bis 500 nm. Die Korrelationslänge I_{c} weist wenigstens in einer Richtung Werte im Bereich von 200 nm bis 50.000 nm, vorzugsweise zwischen 1.000 nm bis 10.000 nm, auf. Die mikroskopisch feinen Reliefstrukturelemente der isotropen Mattstruktur weisen keine azimutale Vorzugsrichtung auf, weshalb das gestreute Licht mit einer Intensität, die grösser als ein z.B. durch die visuelle Erkennbarkeit vorbestimmter Grenzwert ist, in einem durch das Streuvermögen der Mattstruktur vorbestimmten Raumwinkel in allen azimutalen Richtungen gleichmässig verteilt ist. Stark streuende Mattstrukturen verteilen das gestreute Licht in einen grösseren Raumwinkel als eine schwach streuende Mattstruktur.

Weisen hingegen die mikroskopisch feinen Reliefstrukturelemente im Azimut eine bevorzugte Richtung auf, streut die Mattstruktur einfallendes Licht anisotrop. Der durch das Streuvermögen der Mattstruktur vorbestimmte Raumwinkel besitzt als Querschnitt eine Ellipsenform, deren grosse Hauptachse senkrecht zur bevorzugten Richtung der Reliefstrukturelemente weist. Im Gegensatz zu den diffraktiven Strukturen streuen die Mattstrukturen das einfallende Licht praktisch unabhängig von dessen Wellenlänge, d.h. die Farbe des gestreuten Lichts entspricht im wesentlichen derjenigen des auf die Mattstrukturen einfallenden Lichts.

Die Figur 3 zeigt einen beispielhaften Querschnitt durch eine der Mattstrukturen, die als Reliefstruktur 5 in die Schicht 2 abgeformt ist. Anstelle der Strukturtiefe T (Fig. 1) der Gitter weist das Profil der Mattstruktur den Mittenrauhwert Rₐ auf. Die feinen Reliefstrukturelemente der Mattstruktur weisen grösste Höhenunterschiede H bis zu etwa dem 10-fachen des Mittenrauhwerts Rₐ auf. Die grössten Höhenunterschiede H der Mattstruktur entsprechen somit der Strukturtiefe T für die periodischen Gitter. Die Werte der Höhenunterschiede H der Mattstrukturen liegen im oben genannten Bereich der Strukturtiefe T. Die nachstehend gemachten Angaben für den Bereich der Strukturtiefe T gelten somit sowohl für Reliefstrukturen 5 mit periodischen Gittern als auch für Reliefstrukturen 5 mit Mattstrukturen.

Anhand der Figur 4 wird ein holographisches Verfahren beschrieben, das mittels Photostrukturierung der Reliefstruktur 5 additiv ein in der Zeichnung der Figur 4 nicht gezeigtes Beugungsgitter überlagert. Ein kohärenter Lichtstrahl 6 mit einer Wellenlänge von beispielsweise 400 nm wird in einer Laserlichtquelle 7 erzeugt. Der Lichtstrahl 6 trifft auf einen Strahlteiler 8. Der Strahlteiler 8 lenkt einen Teil des Lichtstrahls 6 als Teilstrahl 9 in Richtung der Reliefstruktur 5. Das übrige, den Strahlteiler 8 unabgelenkt durchdringende Licht bildet einen Referenzstrahl 10. Ein Umlenkspiegel 11 richtet den Referenzstrahl 10 ebenfalls auf die Reliefstruktur 5. Der Teilstrahl 9 und der Referenzstrahl 10 sind so aufgefächert, dass jeder der Strahlen 9, 10 einzeln die ganze Reliefstruktur 5 mit parallelen Lichtstrahlen beleuchten würde. Die Richtung des Teilstrahls 9 unterscheidet sich von der Richtung des Referenzstrahls 10, so dass sich der Teilstrahl 9 und der Referenzstrahl 10 im Bereich der strukturierten Oberfläche unter einem vorbestimmten Schnittwinkel schneiden. Wegen der Kohärenz der Lichtwellen und der Weglängendifferenz der beiden Strahlen 9, 10 interferieren der Teilstrahl 9 und der Referenzstrahl 10 derart miteinander, dass sich auf der Reliefstruktur 5 ein Interferenzmuster ausbildet. Das Interferenzmuster umfasst parallele Streifen von grosser Lichtintensität die durch Streifen von geringer Lichtintensität getrennt sind, wobei die Streifen des Interferenzmusters die Spur einer vom Teilstrahl 9 und vom Referenzstrahl 10 aufgespannten Ebene auf der Reliefstruktur 5 senkrecht schneiden. Die Anzahl Streifen pro Millimeter ist bestimmt durch die Wellenlänge des die Strahlen 6, 9, 10 bildenden Lichts und durch den Schnittwinkel, unter dem sich der Teilstrahl 9 und der Referenzstrahl 10 schneiden.

Durch Drehen des Substrats 1 um eine Normale 15 auf die Ebene des Substrats 1 wird das Substrat 1 und damit die Reliefstruktur 5 vor der Belichtung auf das Interferenzmuster im Azimut ausgerichtet und ein vorbestimmter Azimutwert eingestellt.

Das Material des oben genannten Photoresist wird durch die Belichtung mit dem Interferenzmuster nur in den Streifen mit der grossen Lichtintensität derart verändert, dass sich nach der Exposition das Material des Photoresist unter der Einwirkung des , z.B. Shipley Mikroposit 351, Entwicklers auflöst. In der Oberfläche des Photoresist entstehen dabei Vertiefungen in Form von parallelen Furchen eines Beugungsgitters, dessen Gitterperiode gleich dem Abstand der Streifen im Interferenzmuster ist. Die Gitterperiode ist einstellbar, indem der Schnittwinkel, unter dem sich der Teilstrahl 9 und der Referenzstrahl 10 schneiden, verändert wird. Die Wellenlänge des Lichtstrahls 6 ist durch die Laserlichtquelle vorbestimmt und muss sich für die Belichtung des Photoresist der Schicht 2 eignen.

Das Profil der Furchen und deren geometrische Profiltiefe t werden durch die Belichtungszeit, die Entwicklungszeit und die Lichtintensität bestimmt. Die Tiefe der Furchen erreicht einen vorbestimmten Wert von normalerweise 250 nm. Das Profil ist symmetrisch und reicht vom einfachen Sinusprofil bis zum Rechteckprofil. Die Lage der Furchen ist durch die Streifen des Interferenzmusters bestimmt. Daher unterscheiden sich die Gitterlinien der Reliefstruktur 5 und die Furchen der Beugungsstruktur im Azimut um den eingestellten vorbestimmten Azimutwert.

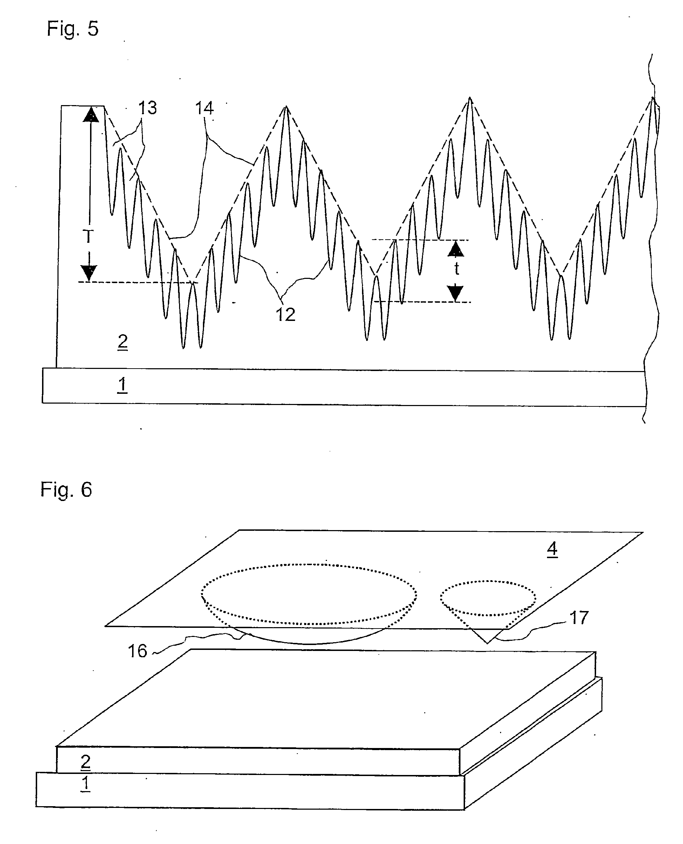

In der Figur 5 ist die Oberfläche der Schicht 2 nach der Photostrukturierung der Reliefstruktur 5 (Fig. 4) dargestellt. Eine Mikrostruktur 12 hat sich in der Oberfläche der Schicht 2 ausgebildet, welche durch die additive Überlagerung der Reliefstruktur 5 mit der holographisch erzeugten Beugungsstruktur entstanden ist, wobei in dem Beispiel die Gitterlinien der Reliefstruktur 5 und die Furchen 13 der Beugungsstruktur eine gleiche azimutale Ausrichtung aufweisen. In der Zeichnung der Figur 5 ist die ursprüngliche Reliefstruktur 5 mittels einer gestrichelten Linie 14 angedeutet. Der ursprünglich zwischen der gestrichelten Linie 14 und der Mikrostruktur 12 vorhanden gewesene Photoresist ist beim Entwickeln entfernt worden.

Nach dem Trocknen des Photoresist wird die Mikrostruktur 12 in bekannter Weise galvanisch in Nickel abgeformt und so einen Master der Mikrostruktur 12 erzeugt. Der reflektierende Master wird einer Prüfung unterzogen, ob die optischen Eigenschaften des Masters den erwarteten entsprechen. Von diesem Master werden dann Kopien angefertigt, mit denen in Kunststoff oder Metall Ausschnitte aus dem Master mit anderen Beugungsstrukturen, spiegelnden Flächen etc. zu einem mosaikartigen Muster für ein optisches Sicherheitselement kombiniert werden.

Dieses Herstellverfahren hat den Vorteil, dass weitgehend (und besser als bei anderen Verfahren) sichergestellt ist, dass für die Mikrostruktur 12 eine echte Addition der zu kombinierenden Strukturen, der Reliefstruktur 5 und der Beugungsstruktur, erreicht wird, wobei die Geometrien der Reliefstruktur 5 und der Beugungsstruktur weitgehend erhalten bleiben.

Hierbei können auch Strukturen kombiniert werden, welche sich hinsichtlich ihrer Dimension stark unterscheiden. Beispielsweise kann die Reliefstruktur 5 eine Strukturtiefe T von mehr als 2 µm aufweisen und eine der Mattstrukturen oder eines der Gitter oder gar Mikroprismen eines Retroreflektors sein. Die Reliefstruktur 5 wird mit der Beugungsstruktur mit einem kleinen Wert der Gitterperiode überlagert.

Bei einem ersten Verfahren zur Erzeugung der Mikrostruktur 12 wird eines der oben beschriebenen periodischen Gitter als Reliefstruktur 5 in die Schicht 2 abgeformt, das mit der Beugungsstruktur photostrukturiert wird. Die Spatialfrequenz der Beugungsstruktur ist in einer speziellen Ausführung wenigstens fünfmal höher ist als die Spatialfrequenz der Reliefstruktur 5.

Bei einem zweiten Verfahren zur Erzeugung der Mikrostruktur 12 wird eine der oben beschriebenen Mattstrukturen in die Schicht 2 abgeformt, die mit der Beugungsstruktur photostrukturiert wird. Die Gitterperiode der Beugungsstruktur beträgt höchstens 500 nm, damit Licht nur in die nullte Beugungsordnung reflektiert wird. Der Vorteil dieser Mikrostruktur 12 ist, dass sie das Streuvermögen der Mattstruktur mit den Eigenschaften des Beugungsgitters, wie z.B. wellenlängen-selektives Reflexionsvermögen, Polarisationsvermögen usw. vereint.

Die Verfahren zur Erzeugung der Mikrostruktur 12 können auf eine erste Art erweitert werden, indem nach der erfolgten, vorherigen Photostrukturierung der Schnittwinkel verändert wird, unter dem sich der Teilstrahl 9 (Fig. 4) und der Referenzstrahl 10 (Fig. 4) schneiden, und eine weitere Photostrukturierung mit einem Interferenzmuster erfolgt, dessen Streifenmuster in der Anzahl der Streifen pro Millimeter gegenüber der vorherigen Photostrukturierung verändert ist. Diese Erweiterung des Verfahrens mit einer anderen Einstellung der Spatialfrequenz des Streifenmusters wird einmal durchgeführt oder mehrmals mit verschiedenen Werten der Spatialfrequenz wiederholt, bis die vorbestimmte Mikrostruktur 12 erreicht ist.

Die Verfahren zur Erzeugung der Mikrostruktur 12 lassen sich auf eine zweite Art erweitern, indem nach der erfolgten, vorherigen Photostrukturierung eine weitere Photostrukturierung mit einer anderen azimutalen Ausrichtung des Substrats 1 auf das vom Teilstrahl 9 (Fig. 4) und vom Referenzstrahl 10 (Fig. 4) gebildete Interferenzmuster erfolgt. Diese Erweiterung der oben beschriebenen Photostrukturierung mit einer anderen Einstellung der azimutalen Ausrichtung wird einmal durchgeführt oder mehrmals mit anderen azimutalen Ausrichtungen wiederholt, bis die vorbestimmte Mikrostruktur 12 erreicht ist.

Die Verfahren zur Erzeugung der Mikrostruktur 12 können auf eine dritte Art variiert werden, indem nach der erfolgten, vorherigen Photostrukturierung sowohl die Spatialfrequenz des Streifenmusters als auch die azimutale Ausrichtung verändert werden und anschliessend eine weitere Photostrukturierung erfolgt. Diese Erweiterung der oben beschriebenen Photostrukturierung mit einer anderen Einstellung der Spatialfrequenz des Streifenmusters und der azimutalen Ausrichtung wird einmal durchgeführt oder mehrmals mit anderen Einstellwerten wiederholt, bis die vorbestimmte Mikrostruktur 12 erreicht ist.

In dem als bevorzugt beschriebenen Verfahren wird im Schritt a) ein Prägeverfahren zum Abformen der Reliefstruktur 5 verwendet..

Es kann aber auch das Verfahren im Schritt a) dahingehend abgeändert werden, dass die Reliefstruktur 5 bereits beim Giessen der Schicht 2 abgeformt wird. Der flüssige Photoresist wird dabei in eine Gussform bestehend aus dem Substrat 1 und der dem Substrat 1 gegenüberliegenden Reliefmatrize 4 (Fig. 1) gegossen. Nach dem Verfestigen des Photoresist unter Wärmeeinwirkung wird die Reliefmatrize 4 entfernt. Die freie Oberfläche der Schicht 2 weist die Reliefstruktur 5 als das Negativ der Reliefmatrize 4 auf.

In einer weiteren Variante, welche nicht unter Anspruch 1 fällt, kann die Reliefstruktur 5 direkt mit einem Stichel mechanisch in die Schicht 2 eingeschnitten werden.

Eine Variante des Verfahrens nach Figur 6 verwendet als Reliefmatrize 4 eine Struktur, die wenigstens eine Paraboloid - Fläche 16 und/oder eine Kegelspitze 17 enthält. Die Paraboloid - Flächen 16 und/oder die Kegelspitzen 17 werden auch mit dem oben beschriebenen periodischen Gitter kombiniert. Die Reliefmatrize 4 wird in die Schicht 2 auf dem Substrat 1 abgeformt. Anschliessend erfolgt die Photostrukturierung.

Eine weitere Variante des Verfahrens zur Erzeugung der Mikrostruktur 12, welche nicht unter Anspruch 1 fällt, verwendet anstelle des Gitters oder der Mattstruktur als Reliefmatrize 4 eine bereits vorhandene Kombinationsstruktur mit überlagerten Strukturen, die in den oben beschriebenen Verfahrensschritten zunächst zum Erzeugen der Reliefstruktur 5 in die Oberfläche der Schicht 2 aus Photoresist abgeformt und anschliessend weiter photostrukturiert wird.

Es ist bekannt, dass neben dem oben beschriebenen, positiv arbeitenden Photoresist auch ein negativ arbeitender Photoresist (Futurrex NR7 - 1000PY) angeboten wird, der sich für dieses Verfahren gut eignet.

## Patentansprüche

1. Verfahren zum Herstellen von lichtbeugenden Mikrostrukturen (13) in einer Schicht (2) aus Photoresist auf einem Substrat (1), welche durch Überlagerungen einer ersten Reliefstruktur (5) mit wenigstens einer zweiten, als Beugungsstruktur (12) dienenden Reliefstruktur entstehen, **gekennzeichnet durch** die Schritte
a) Herstellen einer Schicht (2) aus Photoresist mit einer ersten Reliefstruktur (5) auf einem ebenen Substrat (1), die **durch** Abformen einer dem Substrat (1) gegenüberliegenden Reliefmatrize (4) in die freie Oberfläche der Schicht (2) erzeugt wird,
b) Entfernen der Reliefmatrize (4),
c) Erzeugen eines Interferenzmusters auf der Reliefstruktur (5), wobei kohärentes Licht in einen Teilstrahl (9) und in einen Referenzstrahl (10) aufgespaltet und der Teilstrahl (9) und der Referenzstrahl (10) einen vorbestimmten Schnittwinkel einschliessend auf der abgeformten ersten Reliefstruktur (5) zur Interferenz gebracht werden,
d) Ausrichten des Interferenzmusters, das Streifen von grosser Lichtintensität getrennt **durch** Streifen von geringer Lichtintensität umfasst, im Azimut auf die erste Reliefstruktur (5) **durch** Drehen des Substrats (1) um eine Normale (15) zur Ebene des Substrats (1),
e) Belichten der ersten Reliefstruktur (5) in der Photoresist-Schicht (2) mittels des Interferenzmusters während einer vorbestimmten Zeit,
f) Entwickeln des Photoresist während einer vorbestimmten Zeit, wobei **durch** die Belichtung verändertes Material des Photoresists teilweise entfernt wird und in der ersten Reliefstruktur (5) Furchen (13) der Beugungsstruktur (12) entstehen, und
g) Trocknen des Photoresists.

2. Verfahren nach Anspruch 1,
**dadurch gekennzeichnet,**
**dass** im Schritt f) die Zeit zum Entwickeln des Photoresist so bemessen wird, dass die Furchen (13) der Beugungsstruktur (12) eine Tiefe von höchstens 500 nm, vorzugsweise von höchstens 250 nm erreichen.

3. Verfahren nach Anspruch 1 oder 2,
**dadurch gekennzeichnet,**
**dass** im Schritt a) zuerst die Photoresist-Schicht (2) auf dem ebenen Substrat (1) erzeugt, durch Wärmeeinwirkung verfestigt und anschliessend die auf einem Prägestempel (3) angebrachte Reliefmatrize (4) in die freie Oberfläche der Photoresist-Schicht (2) so abgesenkt wird, dass die erste Reliefstruktur (5) als ein Negativ der Reliefmatrize (4) abgeformt wird.

4. Verfahren nach Anspruch 1 oder 2,
**dadurch gekennzeichnet,**
**dass** im Schritt a) die Schicht (2) durch Giessen hergestellt wird, wobei der flüssige Photoresist zwischen das Substrat (1) und eine Reliefmatrize (4) gegossen wird, und dass nach dem Verfestigen des Photoresist unter Wärmeeinwirkung und dem Ausformen die freie Oberfläche der Schicht (2) die erste Reliefstruktur (5) als ein Negativ der Reliefmatrize (4) aufweist.

5. Verfahren nach einem der Ansprüche 1 bis 4,
**dadurch gekennzeichnet,**
**dass** im Schritt a) als erste Reliefstruktur (5) ein periodisches Gitter in die Photoresist-Schicht (2) abgeformt wird.

6. Verfahren nach einem der Ansprüche 1 bis 4,
**dadurch gekennzeichnet,**
**dass** im Schritt a) als erste Reliefstruktur (5) ein Kreuzgitter in die Photoresist-Schicht (2) abgeformt wird.

7. Verfahren nach einem der Ansprüche 1 bis 6,
**dadurch gekennzeichnet,**
**dass** im Schritt a) als erste Reliefstruktur (5) ein periodisches Gitter in die Photoresist-Schicht (2) mit einer Spatialfrequenz im Bereich 1 Linie/mm bis 1000 Linien/mm abgeformt wird.

8. Verfahren nach Anspruch 5 oder 6,
**dadurch gekennzeichnet,**
**dass** im Schritt c) der Schnittwinkel zwischen dem Teilstrahl (9) und dem Referenzstrahl (10) so eingestellt wird, dass als Beugungsstruktur (12) ein Gitter mit einer Spatialfrequenz erzeugt wird, die wenigstens dem Fünffachen der Spatialfrequenz der Reliefstruktur (5) entspricht.

9. Verfahren nach einem der Ansprüche 1 bis 4,
**dadurch gekennzeichnet,**
**dass** im Schritt a) als erste Reliefstruktur (5) eine der lichtstreuenden Mattstrukturen in die Photoresist-Schicht (2) abgeformt wird.

10. Verfahren nach einem der Ansprüche 1 bis 4,
**dadurch gekennzeichnet,**
**dass** im Schritt a) zum Abformen der ersten Reliefstruktur (5) eine Reliefmatrize (4) eine Struktur mit wenigstens einer Paraboloid-Fläche (16) und/oder einer Kegelspitze (17) verwendet wird.

11. Verfahren nach einem der Ansprüche 1 bis 10,
**dadurch gekennzeichnet,**
**dass** die Reliefstruktur (5) mit einer Strukturtiefe (T) im Bereich 0.1 µm bis 100 µm abgeformt wird.

12. Verfahren nach einem der Ansprüche 1 bis 11.
**dadurch gekennzeichnet,**
**dass** vor Ausführen des Schrittes g) die Photostrukturierung mit wenigstens einer weiteren Beugungsstruktur (12) mit den Schritten c) bis f) wiederholt wird, wobei im Schritt d) durch Drehen des Substrats (1) um die Normale (15) die erste Reliefstruktur (5) mit den Furchen (13) der Beugungsstruktur (12) auf ein neues Interferenzmuster ausgerichtet wird.

13. Verfahren nach Anspruch 12,
**dadurch gekennzeichnet,**
**dass** bei der Wiederholung der Photostrukturierung beim Schritt b) der Schnittwinkel zwischen dem Teilstrahl (9) und dem Referenzstrahl (10) verändert wird.

14. Verfahren nach einem der Ansprüche 1 bis 13,
**dadurch gekennzeichnet,**
**dass** im Schritt b) der Schnittwinkel zwischen dem Teilstrahl (9) und dem Referenzstrahl (10) so eingestellt wird, dass die Beugungsstruktur (12) mit einer Gitterperiode von höchstens 500 nm erzeugt wird.

## Claims

1. Method for producing light-diffracting microstructures (13) in a layer (2) made of photoresist on a substrate (1), which are formed by superimposing a first relief structure (5) with at least one second relief structure which serves as diffracting structure (12), **characterized by** the following steps:
a) producing a layer (2) made of photoresist with a first relief structure (5) on a planar substrate (1) produced by impressing a relief mould (4), located opposite the substrate (1), into the free surface of the layer (2),
b) removing the relief mould (4),
c) producing an interference pattern on the relief structure (5), wherein coherent light is split into a partial beam (9) and into a reference beam (10), and the partial beam (9) and the reference beam (10), including a predetermined intersecting angle, are brought to interference on the impressed first relief structure (5),
d) aligning the interference pattern, which comprises stripes of great light intensity separated by stripes of low light intensity, in the azimuth with the first relief structure (5) by rotating the substrate (1) about a normal (15) to the plane of the substrate (1),
e) exposing the first relief structure (5) in the photoresist layer (2) using the interference pattern during a predetermined time,
f) developing the photoresist during a predetermined time, wherein material, changed by the exposure, of the photoresist is partially removed and furrows (13) of the diffracting structure (12) form in the first relief structure (5), and
g) drying of the photoresist.

2. Method according to Claim 1, **characterized in that** in step f), the time for developing the photoresist is dimensioned such that the furrows (13) of the diffracting structure (12) reach a depth of at most 500 nm, preferably at most 250 nm.

3. Method according to Claim 1 or 2, **characterized in that** in step a), first the photoresist layer (2) is produced on the planar substrate (1), solidified by the action of heat and subsequently the relief mould (4) attached to an embossing stamp (3) is lowered into the free surface of the photoresist layer (2) such that the first relief structure (5) is impressed as a negative of the relief mould (4).

4. Method according to Claim 1 or 2, **characterized in that** in step a), the layer (2) is produced by means of casting, wherein the liquid photoresist is cast between the substrate (1) and a relief mould (4), and **in that**, after the photoresist has solidified due to the action of heat and after the mould release, the free surface of the layer (2) has the first relief structure (5) as a negative of the relief mould (4).

5. Method according to one of Claims 1 to 4, **characterized in that** in step a), a periodic grating is impressed as first relief structure (5) into the photoresist layer (2).

6. Method according to one of Claims 1 to 4, **characterized in that** in step a), a cross grating is impressed as first relief structure (5) into the photoresist layer (2).

7. Method according to one of Claims 1 to 6, **characterized in that** in step a), a periodic grating is impressed as first relief structure (5) into the photoresist layer (2) with a spatial frequency in the range from 1 line/mm to 1000 lines/mm.

8. Method according to Claim 5 or 6, **characterized in that** in step c), the intersecting angle between the partial beam (9) and the reference beam (10) is set such that a grating with a spatial frequency corresponding to at least five times the spatial frequency of the relief structure (5) is produced as diffracting structure (12).

9. Method according to one of Claims 1 to 4, **characterized in that** in step a), one of the light-scattering matt structures is impressed as first relief structure (5) into the photoresist layer (2).

10. Method according to one of Claims 1 to 4, **characterized in that** in step a), a structure with at least one paraboloidal surface (16) and/or one cone vertex (17) is used as a relief mould (4) for impressing the first relief structure (5).

11. Method according to one of Claims 1 to 10, **characterized in that** the relief structure (5) is impressed with a structure depth (T) in the range from 0.1 µm to 100 µm.

12. Method according to one of Claims 1 to 11, **characterized in that**, before step g) is carried out, the photopatterning is repeated with at least one further diffracting structure (12) with the steps c) to f), wherein in step d), the first relief structure (5) with the furrows (13) of the diffracting structure (12) is aligned with a new interference pattern by rotating the substrate (1) about the normal (15).

13. Method according to Claim 12, **characterized in that**, as the photopatterning is being repeated, during step b), the intersecting angle between the partial beam (9) and the reference beam (10) is modified.

14. Method according to one of Claims 1 to 13, **characterized in that** in step b), the intersecting angle between the partial beam (9) and the reference beam (10) is set such that the diffracting structure (12) is produced with a grating period of at most 500 nm.

## Revendications

1. Procédé de réalisation de microstructures de diffraction de la lumière (13) générées dans une couche (2) de laque photosensible sur un substrat (1) par des superpositions d'une première structure en relief (5) avec au moins une deuxième structure en relief servant de structure de diffraction (12), **caractérisé par** les étapes consistant à
a) réaliser sur un substrat plan (1) une couche (2) de laque photosensible avec une première structure en relief (5) qui est produite par la reproduction de la forme d'une matrice en relief (4) faisant face au substrat (1) dans la surface libre de la couche (2),
b) retirer la matrice en relief (4),
c) générer un motif d'interférence sur la structure en relief (5), de la lumière cohérente étant partagée en un faisceau partiel (9) et un faisceau de référence (10) et le faisceau partiel (9) et le faisceau de référence (10) interférant mutuellement selon un angle d'attaque prédéfini entre eux sur la première structure en relief (5) formée,
d) orienter le motif d'interférence, qui comprend des raies de forte intensité lumineuse séparées par des raies de faible intensité lumineuse, dans l'azimut sur la première structure en relief (5) en faisant tourner le substrat (1) autour d'une perpendiculaire (15) au plan du substrat (1),
e) insoler la première structure en relief (5) dans la couche de laque photosensible (2) au moyen du motif d'interférence pendant une durée prédéfinie,
f) développer la laque photosensible pendant une durée prédéfinie, le matériau de la laque photosensible modifié par l'insolation étant en partie enlevé et créant dans la première structure en relief (5) des sillons (13) de la structure de diffraction (12), et
g) sécher la laque photosensible.

2. Procédé selon la revendication 1, **caractérisé en ce que**, à l'étape f), le temps de développement de la laque photosensible est fixé à une valeur telle que les sillons (13) de la structure de diffraction (12) atteignent une profondeur maximale de 500 nm, de préférence une profondeur maximale de 250 nm.

3. Procédé selon la revendication 1 ou la revendication 2, **caractérisé en ce que**, à l'étape a), la couche de laque photosensible (2) est d'abord réalisée sur le substrat plan (1), solidifiée sous l'action de la chaleur et ensuite la matrice en relief (4) fixée sur un poinçon d'estampage (3) est abaissée dans la surface libre de la couche de laque photosensible (2) de façon à reproduire la première structure en relief (5) sous la forme d'un négatif de la matrice en relief (4).

4. Procédé selon la revendication 1 ou la revendication 2, **caractérisé en ce que**, à l'étape a), la couche (2) est réalisée par coulée, la laque photosensible liquide étant coulée entre le substrat (1) et une matrice en relief (4), et **en ce que**, après la solidification de la laque photosensible sous l'action de la chaleur et après le démoulage, la surface libre de la couche (2) présente la première structure en relief (5) sous la forme d'un négatif de la matrice en relief (4).

5. Procédé selon l'une des revendications 1 à 4, **caractérisé en ce que**, à l'étape a), une grille périodique est formée en tant que première structure en relief (5) dans la couche de laque photosensible (2).

6. Procédé selon l'une des revendications 1 à 4, **caractérisé en ce que**, à l'étape a), une grille croisée est formée en tant que première structure en relief (5) dans la couche de laque photosensible (2).

7. Procédé selon l'une des revendications 1 à 6, **caractérisé en ce que**, à l'étape a), une grille périodique est formée en tant que première structure en relief (5) dans la couche de laque photosensible (2) avec une fréquence spatiale dans la plage de 1 ligne/mm à 1000 lignes/mm.

8. Procédé selon la revendication 5 ou la revendication 6, **caractérisé en ce que**, à l'étape c), l'angle entre le faisceau partiel (9) et le faisceau de référence (10) est ajusté de façon à créer en tant que structure de diffraction (12) une grille ayant une fréquence spatiale qui correspond au moins au quintuple de la fréquence spatiale de la structure en relief (5).

9. Procédé selon l'une des revendications 1 à 4, **caractérisé en ce que**, à l'étape a), une des structures mates diffractives est formée en tant que première structure en relief (5) dans la couche de laque photosensible (2).

10. Procédé selon l'une des revendications 1 à 4, **caractérisé en ce que**, à l'étape a), pour former la première structure en relief (5), on utilise une matrice en relief (4) présentant une structure avec au moins une surface paraboloïde (16) et/ou une pointe conique (17).

11. Procédé selon l'une des revendications 1 à 10, **caractérisé en ce que** la structure en relief (5) est formée avec une profondeur de structure (T) dans la plage de 0,1 µm à 100 µm.

12. Procédé selon l'une des revendications 1 à 11, **caractérisé en ce que**, avant de réaliser l'étape g), la photostructuration avec au moins une autre structure de diffraction (12) est répétée suivant les étapes c) à f), la première structure en relief (5) avec les sillons (13) de la structure de diffraction (12) étant alignée sur un nouveau motif d'interférence à l'étape d) en faisant tourner le substrat (1) autour de la perpendiculaire (15).

13. Procédé selon la revendication 12, **caractérisé en ce qu'**on modifie l'angle d'attaque entre le faisceau partiel (9) et le faisceau de référence (10) lors de la répétition de la photostructuration à l'étape b).

14. Procédé selon l'une des revendications 1 à 13, **caractérisé en ce que**, à l'étape b), l'angle d'attaque entre le faisceau partiel (9) et le faisceau de référence (10) est ajusté de façon à créer la structure de diffraction (12) avec une période de grille maximale de 500 nm.
